# EUROPEAN PATENT APPLICATION

(11) **EP 4 086 373 A1**
(43) Date of publication of application: **09.11.2022**
(21) Application number: 21187507.5
(22) Date of filing: 23.07.2021
(51) Int. Cl.: C25B 9/70, C25B 15/00

(54) **HYDROPOWER-ELECTROLYSIS SYSTEM**

(30) Priority: 07.05.2021 EP 21172768
(71) Applicant: Siemens Energy Global GmbH & Co. KG, 81739 München (DE)
(72) Inventor: Fleischer, Maximilian, 85635 Höhenkirchen (DE); Thiemann, Thomas, 45659 Recklinghausen (DE)

(57) **Abstract**

The present invention relates to the generation of at least one electrolysis product (7), in particular to a hydropower-electrolysis system (1), a hydro power plant and a method for generating at least one electrolysis product (7). An electrolysis assembly (2) comprises a plurality of electrolysis cells configured to generate, upon provision of a direct electrical current, at least one electrolysis product (7) from a supply medium (8). A hydropower assembly (3) is electrically connected to the electrolysis assembly (2) for operating the electrolysis cells of the electrolysis assembly (2) based on electrical power generated by the hydropower assembly (3).

## Description

The present invention relates to the generation of at least one electrolysis product, in particular to a hydropower-electrolysis system, a hydro power plant and a method for generating at least one electrolysis product.

Electrolysis is a widely known electro-chemical method, wherein a direct (electrical) current DC is used to drive an otherwise non-spontaneous chemical reaction. Electrolysis has gotten recent attention as a factor in fighting climate change, as it may be utilised in so-called "power to X" processes. In these processes, electrical energy is used to generally convert a supply medium (such as water or CO2) into chemical energy via electrolysis. The electrolysis products containing this energy range from e.g. hydrogen H2 (with O2 as by-product) over small hydrocarbons like methane CH4 (also termed "synthetic natural gas" SNG or synthetic LNG in its liquid form), Ethylene C2H4 or Ethanol C2H5OH to ammonia NH3 or carbon monoxide CO. These molecules may be used as fuel, e.g. for planes, ships, cars, or other vehicles or electric generators, or as feedstock for the chemical industry.

A currently established industrial procedure is to generate renewable electrical energy, transport this energy via the electrical (public) power grid to an electrolyser and then produce these electrolysis products out of a supply medium, e.g. water H2O, carbon dioxide CO2 or nitrogen N2. This procedure provides the advantage of a certain spatial decoupling of renewable energy generation and the generation of the electrolysis products.

It is an object of the present invention to improve the generation of an electrolysis product, in particular to increase the efficiency of this process, simplify intermediate electrical components and/or reduce the overall costs.

This object is solved by a hydropower-electrolysis system, a hydrogen power plant and a method for generating at least one electrolysis product according to the independent claims.

Preferred embodiments of the invention are subject to the dependent claims and the following description.

A first aspect of the invention relates to a hydropower-electrolysis system. The hydropower-electrolysis system comprises an electrolysis assembly and a hydropower assembly. The electrolysis assembly comprises a plurality of electrolysis cells configured to generate, upon provision of a direct electrical current, at least one electrolysis product from a supply medium. The hydropower assembly is directly electrically connected, e.g. via corresponding interface components, to the electrolysis assembly for operating the electrolysis cells of the electrolysis assembly based on electrical power generated by the hydropower assembly.

The hydropower assembly may be configured to generate direct electrical current or alternating electrical current converted, preferably on site, into direct electrical current.

An aspect of the invention is based on the approach of directly using the kinetic energy of water from a water reservoir for electrolysis, which is particularly advantageous if water is used as a supply medium in the electrolysis process. Therein, a hydropower assembly preferably consists of at least one water turbine for converting kinetic energy of the water into mechanical energy, and at least one electric generator for converting this mechanical energy into an electrical voltage and current, in particular an AC or DC electrical current. Directly coupling a hydropower assembly with an electrolysis assembly for electrolysis is particularly advantageous because hydropower assemblies usually have high load factors, i.e. many operating hours per day. Directly coupling the hydropower assembly with an electrolysis assembly accordingly allows for continuous supply of power to electrolysis cells of the electrolysis assembly. This can enhance the steady-state operation of the electrolysis cells and thereby increase their lifetime as well as reducing the costs of the produced electrolysis product(s) due to better equipment utilization.

The hydropower-electrolysis system is preferably configured to operate the electrolysis assembly directly with the voltage and/or current generated by the hydropower assembly. In other words, the hydropower assembly is advantageously directly electrically coupled, e.g. via corresponding interface components, to the electrolysis assembly. An according electrical coupling is preferably configured either to transmit direct electrical current (DC) generated by the hydropower assembly directly to the electrolysis assembly, or to convert alternating electrical current (AC) generated by the hydropower assembly into direct electrical current (DC) and provide it to the electrolysis assembly. For example, the hydropower assembly may comprise a rectifier for provision of direct electrical current to the electrolysis assembly. Alternatively or additionally, the hydropower assembly may comprise a transformer for transforming alternating electrical current to a voltage level suitable for operation of the electrolysis assembly. This means that no conversion of the generated electrical current into a high-voltage alternating electrical current suitable for transmission via a power grid, and/or no significant (e.g. larger than a factor of 10) transformation of the corresponding electrical voltage between the hydropower assembly and the electrolysis assembly is necessary. Accordingly, in contrast to conventional solutions where electrical energy is transmitted to an electrolyser via a power grid, the provision of electrical energy to the electrolysis assembly becomes much more simple and efficient. For example, the number of components necessary for supplying the electrolysis assembly with power can be reduced. Also, energy losses by current/voltage transformation(s) can be avoided or at least minimized. This allows for a gain in efficiency.

The electrolysis assembly comprising the plurality of electrolysis cells may be configured as an electrolyser, in particular an industrial electrolyser. Each electrolysis cell preferably comprises at least two electrodes, in particular at least one negative electrode and at least one positive electrode, and may be supplied with a supply medium, for example water H2O, carbon dioxide CO2, or nitrogen N2. From the supply medium, one or more electrolysis product(s) may be generated upon application of direct electrical current to the electrolysis cell, in particular the at least two electrodes.

It is preferred when the electrolysis assembly comprises more than 10 electrolysis cells, in particular between 50 and 1000, allowing an economic production of the electrolysis product. Advantageously, the electrolysis cells are connected in series, allowing the application of electrical voltages in the 1000V regime.

The at least one electrolysis product advantageously contains a high amount of energy. For example, the at least one electrolysis product may comprise energy containing molecules, also termed high-energy molecules, which allow for the controlled release of energy upon a later chemical reaction. Alternatively, the at least one electrolysis product may be suitable for a chemical production reaction, in particular thermochemical reaction, by itself or with another reaction substance to generate an output product containing the high amount of energy, for example plastics, fertilizer or foam materials.

The electrolysis assembly, in particular each of the plurality of electrolysis cells, preferably comprises an inlet port for coupling to a supply line, the supply line being configured to provide the supply medium. Additionally, the electrolysis assembly, in particular each of the plurality of electrolysis cells, preferably comprises an outlet port for coupling to one or more product collection lines, the on or more product collection lines being configured to collect the at least one electrolysis product.

Preferred embodiments of the invention and further aspects thereof are described below, each of which, unless expressly excluded, may be combined with each other and with the aspects of the invention described below as desired.

In a preferred embodiment, the hydropower assembly comprises at least one hydropower unit including a water turbine and an electric generator, in particularly mechanically, coupled to the water turbine, wherein the electric generator is preferably configured to generate electrical direct current (DC). By this means, the generated electrical current can be directly, in particular without any rectification, be provided to the electrolysis assembly. Accordingly, conversion losses can be prevented or at least be minimized.

Alternatively, the electric generator may be configured to generate electrical alternating current (AC). In this case, the hydropower assembly advantageously comprises a rectifier for provision of electrical direct current to the electrolysis assembly.

In another preferred embodiment, the hydropower assembly is located in the proximity of the electrolysis assembly, in particular in a range smaller than 10 km, preferably smaller than 5 km, in particular smaller than 1000 m. By this means, electricity generated by the hydropower assembly can be transferred to the electrolysis assembly without the usage of a (public) power grid. Accordingly, the transmission of electricity can be highly efficient, in particular without requiring large transformations of voltage and/or current levels.

In another preferred embodiment, a DC regulation assembly is provided. The DC regulation assembly is preferably electrically arranged in between the hydropower assembly and the electrolysis assembly. The DC regulation assembly is further preferably configured to adjust the provision of electrical energy to the electrolysis assembly. For example, the DC regulation assembly may comprise DC power electronics for adjusting the electrical energy provided to the electrolysis assembly, in particular the voltage level and/or the current level applied to the electrolysis assembly. The DC regulation assembly may particularly be configured to fine tune the voltage and/or current levels. Providing a DC regulation assembly allows to operate the electrolysis assembly at its optimal operating point and/or protect it from overvoltage. Furthermore, the DC regulation assembly may also be used to ensure an optimal operation regime of the electrolysis assembly to achieve a maximum lifetime of the assembly. A DC regulation assembly is particularly advantageous for adjusting the provision of electrical energy to a single electrolysis assembly or even multiple electrolysis assemblies if a plurality of electrolysis assemblies is supplied with electrical power generated by the hydropower assembly simultaneously.

Preferably, the DC regulation assembly comprises a control unit. The control unit may be configured to control the DC power electronics. For example, the control unit may be configured to adapt the electrical voltage and the amount of direct electrical current provided to the electrolysis assembly according to a predefined target function. By this means, the electrolysis assembly may be optimally driven.

The target function may correspond e.g. to a maximum performance of the electrolysis assembly, grid services, component life-time optimization or minimum degradation, respectively.

In yet another preferred embodiment, at least one energy storage unit is provided. The energy storage unit is preferably configured to store at least a part of the electrical energy generated by the hydropower assembly. Preferably, the energy storage unit is a part of the DC regulation assembly. Accordingly, the control unit may be configured to control the energy storage unit to accumulate energy in a first operating mode, and to release stored energy in a second operating mode. Providing at least one energy storage unit allows for an optimized electrical supply of the electrolysis assembly. In particular, steady-state conditions for the electrolysis assembly can be provided, e.g. even during maintenance breaks of the hydropower assembly or parts thereof.

The provision of at least one energy storage unit may be particularly useful in small hydro power plants, i.e. when the hydropower assembly is in fluid communication with only a small water reservoir used to drive the hydropower assembly, in particular the at least one water turbine. For example, an energy storage unit may be effectively utilised in pumped-storage hydro power plants where it is to be expected that the hydropower assembly cannot power the electrolysis assembly continuously.

For the energy storage unit any kind of storage solutions might be used, e.g. chemical storage such as batteries, hydrogen storage and/or fuel cells, and/or thermal storage.

In yet another preferred embodiment, a plurality of electrolysis units is provided. Therein, each electrolysis unit includes an electrolysis assembly, in particular at least one electrolysis assembly. The hydropower assembly preferably comprises a plurality of hydropower units, each hydropower unit including a water turbine and an electric generator coupled to the water turbine. Further preferably, each hydropower unit is, e.g. pairwise, electrically connected to one of the electrolysis units, in particular to a single one of the electrolysis units. The electric generators of the hydropower units may be arranged to work in parallel. Likewise, the electrolysis assemblies of the electrolysis units may be arranged to work in parallel. In this configuration, the system may scale with the size of a water reservoir used to drive the hydropower assembly, in particular the water turbines. By the provision of a plurality of hydropower units and electrolysis units, the system is particularly suitable for large water reservoirs. Further, in this configuration the system allows strong resilience against disturbances, since each pair of electrolysis unit and hydropower unit may operate independently.

To facilitate efficient supply with supply medium and/or simplify electrolysis product collection, the electrolysis units are preferably coupled to a common supply line and/or common collection line.

In yet another preferred embodiment, a plurality of electrolysis units is provided. Therein, each electrolysis unit includes an electrolysis assembly. The hydropower assembly preferably comprises an, in particular single, electric generator having a plurality of electrical taps, each electrical tap being electrically connected to one of the electrolysis units, in particular a single one of the electrolysis units. For example, the electric generator may be a so-called split electric generator. The electric generator preferably has a plurality of generation coils with individual electrical taps, i.e. electrical outlets, to divide the output voltage into - preferably equal - portions. By this means, the number of components of the system can be reduced. Maintenance of the system may become easier.

In yet another preferred embodiment, the hydropower assembly comprises a plurality of hydropower units. Therein, each hydropower unit includes a water turbine and an electric generator coupled to the water turbine. The plurality of hydropower units are preferably electrically connected in parallel, for example via a main power line. In other words, the electric generators of the plurality of hydropower units are arranged to work in parallel. The main power line is preferably configured to collect the output of the plurality of hydropower units. By connecting the plurality of hydropower units in parallel, the power generation of the hydropower assembly may easily scale with the size of the water reservoir. In particular, in this configuration the hydropower-electrolysis system is suitable for large water reservoirs.

Alternatively or additionally, the electrolysis assembly is electrically connected to the main power line as well. Potentially, this allows flexible allocation of generated power from the hydropower units to a selection of the electrolysis assemblies of the plurality of electrolysis units.

In yet another preferred embodiment, a plurality of electrolysis units is provided. Therein, each electrolysis unit includes an electrolysis assembly. The hydropower assembly preferably comprises a transformer having a plurality of electrical taps, each electrical tap being electrically connected to one of the electrolysis units, in particular a single one of the electrolysis units. For example, the transformer may be a so-called split transformer. The transformer preferably has a plurality of secondary coils with individual electrical taps, i.e. electrical outlets, to divide the output voltage into - preferably equal - portions. By providing a transformer having a plurality of electrical taps, single electrolysis units can easily be shut down e.g. for maintenance, without causing a downtime for the whole system. Preferably, the (single) transformer of the hydropower assembly is electrically connected to the main power line. Accordingly, all electrical power generated by the hydropower units can efficiently be collected and transferred to the electrolysis assembly. This allows for an efficient way of distributing the total electrical power between the plurality of electrolysis units, for example.

In another preferred embodiment, a plurality of electrolysis units is provided. Therein, each electrolysis unit includes an electrolysis assembly. The hydropower assembly preferably comprises a power distribution unit electrically coupled to the plurality of electrolysis units. The power distribution unit is preferably configured to adjust the amount of electrical energy provided to each of the electrolysis units. This allows for optimal operation of at least a part of the electrolysis assemblies at all times, even during suboptimal seasonal or daytime conditions with lower power generation capabilities. Further, unfavourable part-load operation of the electrolysis assemblies can be avoided.

The power distribution unit is preferably electrically connected to the main power line, in particular via a split transformer or a transformer and a rectifier. Alternatively, the power distribution unit is electrically connected to the split electric generator. The power distribution unit may be configured as a power splitter, also termed power switch, to distribute the energy in a continuous manner between the plurality of electrolysis units.

In yet another preferred embodiment, an external power connection is provided. The external power connection is configured to be electrically coupled to a power grid. The external power connection is preferably configured to feed at least a part of the electrical energy generated by the hydropower assembly to the grid, and/or to draw electrical energy from the grid for operation of the electrolysis assembly and/or charging of the energy storage unit. By this means, the power grid may be stabilised. Further, the electrical energy generated by the hydropower assembly can be used more efficiently and/or the electrolysis assembly can be operated more efficiently. For example, depending on electricity prices and/or grid stability demand, electrical energy can be sold or bought for storage e.g. in the energy storage unit.

In yet another embodiment, a compression assembly for pressurizing, optionally liquifying, the at least one electrolysis product is provided. The hydropower assembly preferably comprises at least one water turbine mechanically coupled to the compression assembly. Accordingly, the compression assembly can be driven by the hydropower assembly. In particular, mechanical energy obtained by hydropower can be used directly and hence efficiently and thus saving costs for further equipment such as electrical drives.

Preferably, the compression assembly comprises a gear for coupling to the water turbine. For example, the compression assembly may comprise a compressor. This compressor may be coupled to the water turbine via the gear. By means of the gear, operating points of the turbine and the compression assembly, in particular the compressor, can be matched.

In yet another preferred embodiment, the hydropower-electrolysis system is configured to cool at least one component, in particular the electrolysis assembly and/or the compression assembly and/or the regulation assembly, e.g. the power electronics such as inverter, transformer and/or the same, by means of water for driving the hydropower assembly. To this end, the hydropower-electrolysis system may comprise one or more conduits to route water from the water reservoir and/or exciting the hydropower assembly, in particular the water turbine, to the component, for example at least a part of the electrolysis cells. This allows for a particularly efficient operation of the hydropower-electrolysis system, in particular the electrolysis assembly and/or the compression assembly.

In yet another preferred embodiment, the hydropower-electrolysis system is configured to supply water for driving the hydropower assembly to the electrolysis assembly as the supply medium. For example, one or more conduits may be provided to route water from the reservoir and/or exiting the hydropower assembly, in particular the water turbine, to the electrolysis assembly. These conduits may form the supply line connected to inlet ports of the electrolysis assembly, in particular the plurality of electrolysis cells. By this means, an efficient provision of supply medium may be achieved.

A second aspect of the invention relates to a hydro power plant. The hydro power plant comprises a hydropower-electrolysis system according to the first aspect of the invention. This allows for a particularly flexible usage of the hydro power plant. For example, during daytime, when public power consumption is high, the hydro power plant may predominantly feed electricity into the public power grid. During night time however, when public power consumption is low, the hydropower plant may predominantly and efficiently produce the at least one electrolysis product.

A third aspect of the invention relates to a method for generating at least one electrolysis product with a hydropower-electrolysis system, in particular with the hydropower-electrolysis system according to the first aspect of the invention. The method comprises: (i) converting kinetic energy of water into electrical power by means of a hydropower assembly; and (ii) generating the at least one electrolysis product from a supply medium by means of an electrolysis assembly comprising a plurality of electrolysis cells, wherein the electrical power generated by means of the hydropower assembly is provided to the plurality of electrolysis cells. The properties, features and advantages of the invention described above, as well as the manner in which they are achieved, will be explained in more detail in connection with the figures in the following description of examples. Where appropriate, the same reference signs are used in the figures for the same or corresponding elements of the invention. The examples serve to explain the invention and do not limit the invention to the combinations of features indicated therein, even with respect to functional features. Moreover, any of the features disclosed in the examples below may be considered in isolation and suitably combined with the features of any of the above embodiments and their further aspects.

It is shown in
- FIG 1: an example of a hydropower-electrolysis system comprising an electrolysis assembly and a hydropower assembly for generating direct electrical current by means of a DC electric generator;
- FIG 2: an example of a hydropower-electrolysis system comprising an electrolysis assembly and a hydropower assembly for generating direct electrical current by means of an AC electric generator;
- FIG 3: a first example of a hydropower-electrolysis system comprising a plurality of electrolysis units;
- FIG 4: a second example of a hydropower-electrolysis system comprising a plurality of electrolysis units; and
- FIG 5: an example of a hydropower-electrolysis system comprising a compression assembly.

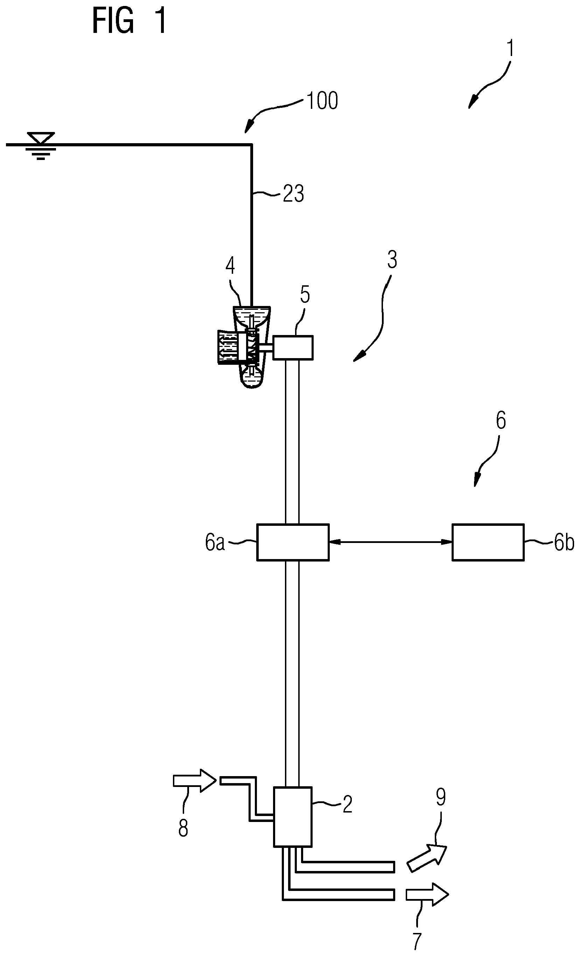

FIG 1 shows an example of a hydropower-electrolysis system 1 comprising an electrolysis assembly 2 for electrolysis and a hydropower assembly 3 for generating direct electrical current (DC) powering the electrolysis assembly 2. To this end, the hydropower assembly 3 comprises a water turbine 4 and an electric generator 5, the electrical generator 5 being configured as a DC electric generator. The electrolysis assembly 2 is electrically connected to the hydropower assembly 3 via a DC regulation assembly 6 for adjusting the provision of electrical energy to the electrolysis assembly 2. To this end, the DC regulation assembly 6 comprises DC power electronics 6a and a control unit 6b for controlling the DC power electronics 6a.

The hydropower assembly 3 is in fluid communication with a water reservoir 100. For example, the water turbine 4 may be arranged directly in or at the water reservoir 100, in particular at an outlet of the water reservoir 100, or connected to the water reservoir 100 by means of a corresponding conduit 23 such as a flow channel or a pipe. The inlet of conduit 23 in view of rising or sinking levels of the water reservoir 100 is preferably always below the level of the water line.

It is also conceivable that the water turbine 4 is directly immersed in the water reservoir 100. The water turbine 4 may be a run-of-river turbine, for instance.

The water reservoir 100 may be a storage reservoir, for example an artificial lake, or a water stream, for example a river. Accordingly, the water from the water reservoir 100 may be used to drive the hydropower assembly 3, in particular the water turbine 4.

The electrolysis assembly 2 is configured to generate at least one electrolysis product 7, for example hydrogen H2, from a supply medium 8, for example water (H2O). Exemplarily, as a side product 9 from the electrolysis process, oxygen O2 is produced. In the case water is the supply medium 8, the supply medium 8 may be directly taken from the water reservoir 100. To this end, at least one corresponding conduit (not shown) may be provided to establish a fluid communication between the water reservoir 100 and the electrolysis assembly 2.

However, a different supply medium 8 such as carbon dioxide CO2 or nitrogen N2 could be provided alternatively. This enables the production of carbon monoxide CO, hydrocarbons such as methane CH4 or Ethylene or ammonia NH3, respectively.

The electrolysis assembly 2 may comprise 30 to 100 electrolysis cells (not shown), each cell operating at a voltage between 1 V and 4 V, e.g. 2.5 V. The electrolysis cells are preferably electrically connected in series. To provide the required voltage and current levels for efficient electrolysis, the electrical generator 5 is preferably configured to generate an electrical voltage in the range of several 100 V up to 2 kV at a direct electrical current in the range of 1 kA to 10 kA. The voltage and current level may then be fine-tuned to the requirements of the electrolysis assembly 2 by means of the DC regulation assembly 6.

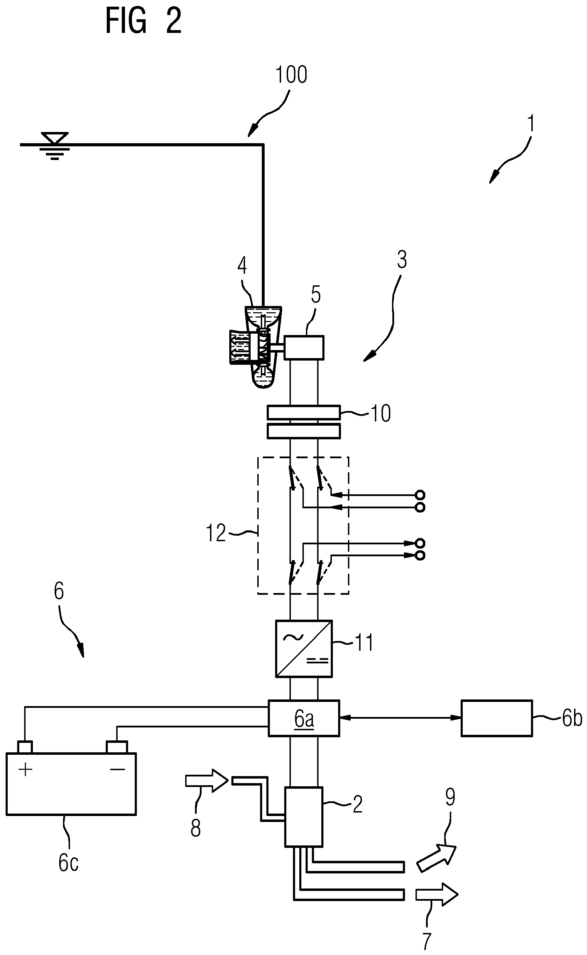

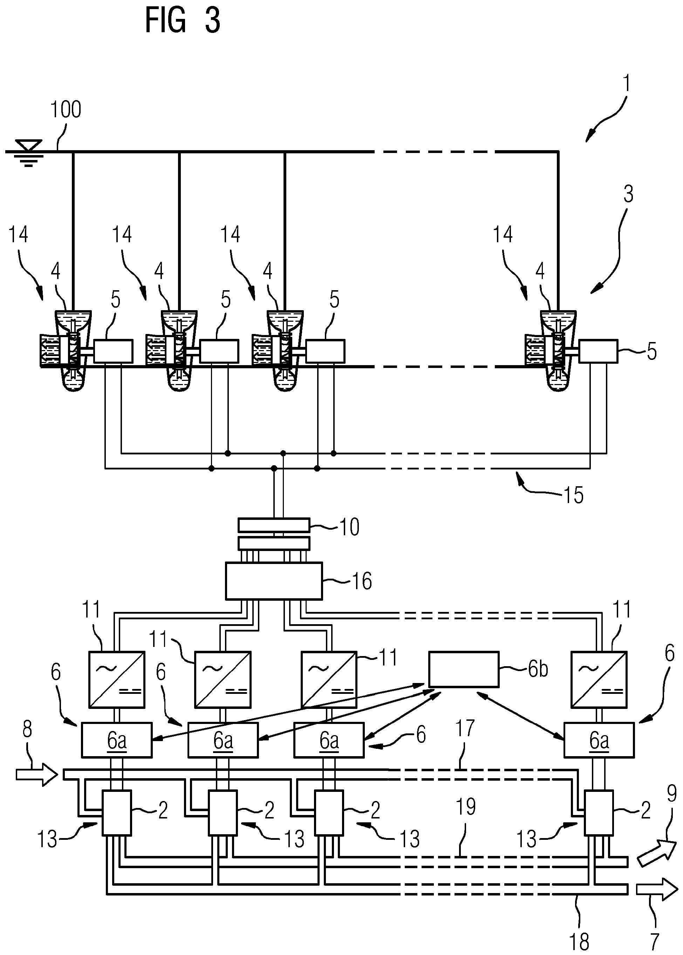

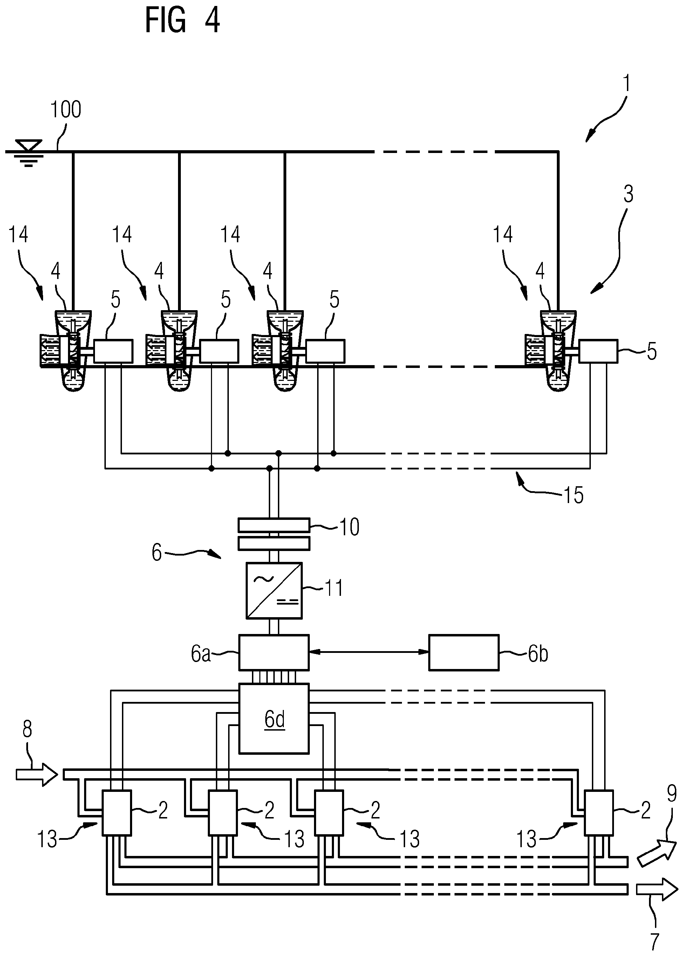

If the electrical generator 5 has a larger power output, this excess power can be used conventionally, e.g. be fed into the power grid (see FIG 2 and corresponding description below). Alternatively or additionally, it can be considered to electrically connect a plurality of electrolysis assemblies to the electrical generator 5, or even to multiple electric generators (see FIGs 3 and 4 and the corresponding description below).

FIG 2 shows an example of a hydropower-electrolysis system 1 comprising an electrolysis assembly 2 for electrolysis and a hydropower assembly 3 for generating direct electrical current powering the electrolysis assembly 2. The hydropower assembly 3 comprises a water turbine 4 and an electrical generator 5 and is in fluid communication with a water reservoir 100. In contrast to the example shown in FIG 1, the electrical generator 5 is configured as an AC electrical generator. Therefore, the hydropower assembly 3 further comprises a transformer 10 and a conversion device 11 configured to rectify the alternating electrical current generated by the electric generator 5. Accordingly, similar to the example shown in FIG 1, at least one electrolysis product 7 may be generated from a supply medium 8, along with a side product 9, by means of a plurality of electrolysis cells (not shown) at least partly forming the electrolysis assembly 2.

The hydropower-electrolysis system 1 further comprises a DC regulation assembly 6 configured to adjust the provision of electrical energy to the electrolysis assembly 2. To this end, the DC regulation assembly preferably comprises DC power electronics 6a as a means to adapt voltage and/or current level to the requirements of the electrolysis assembly 2. As an option, in addition to the DC power electronics 6a and a control unit 6b for controlling the DC power electronics 6a, an energy storage unit 6c may be provided. The energy storage unit 6c is advantageously configured to store at least a part of the electrical energy generated by the hydropower assembly 3, for example excess energy not required for operation of the electrolysis assembly 2. Exemplarily, the energy storage unit 6c may be a battery.

For example, the control unit 6b may be configured to control the DC power electronics 6a to direct at least the part of the electrical energy generated by the hydropower assembly 3 to the energy storage unit 6c in a first operating mode, in order to charge the energy storage unit 6c. The control unit 6b may be further configured to control the DC power electronics 6a to route electrical energy released by the energy storage unit 6c to the electrolysis assembly 2 in a second operating mode. By this means, the electrolysis assembly 2 can be continuously be operated, even during downtime of the hydropower assembly 3 e.g. due to maintenance or failure or to boost the energy input in times of high demand for the electrolysis product.

The hydropower-electrolysis system 1 optionally comprises an external power connection 12 configured to be electrically coupled to a, particularly public, power grid. To this end, the external power connection 12 preferably comprises a step-up transformer for adapting the AC voltage level provided by the hydropower assembly 3 to the voltage level of the power grid. By this means, electricity generated by the hydropower assembly 3 during downtime of the electrolysis assembly 2, e.g. due to maintenance or failure, may be fed into the grid. Alternatively or additionally, in case there is a high electricity demand and/or electricity prices are high, electricity generated by the hydropower assembly 3 may be fed into the grid, while the electrolysis assembly 2 is operated based on electrical energy provided by the energy storage unit 6c. This is particularly advantageous if the energy storage unit 6c has been charged previously with excess hydroelectricity or cheap grid electricity.

Of course, it is also conceivable to operate the electrolysis assembly 2 based on grid electricity if the hydropower assembly 3 is temporarily down, and the system does not comprise the energy storage unit 6c or the energy storage unit 6c is empty, respectively.

Advantageously, the conversion device 11 is also configured to invert direct electrical current provided by the energy storage unit 6c. In other words, the conversion device 11 may be at least temporarily configured as an inverter, for example in a third operating mode. By this means, previously stored electrical energy may be fed into the power grid, for example in order to stabilise the grid.

FIG 3 shows a first example of a hydropower-electrolysis system 1 comprising a plurality of electrolysis units 13 for electrolysis, and a hydropower assembly 3 for generation of direct electrical current powering the electrolysis units 13. Therein, each of the plurality of electrolysis units 13 comprises at least one electrolysis assembly 2 including a plurality of electrolysis cells (not shown). The electrolysis cells are configured to generate at least one electrolysis product 7 from a supply medium 8, along with a side product 9. The hydropower assembly 3 comprises a plurality of hydropower units 14. Each hydropower unit 14 includes a water turbine 4 in fluid communication with a water reservoir 100 and an electrical generator 5. In the present example, the electrical generator 5 is configured as an AC electrical generator.

The hydropower units 14 may be electrically connected in parallel via a main power line 15. By this means, the electrical energy generated by the hydropower units 14 may be collected and directed to the electrolysis assembly 2 via a (single) transformer 10. The transformer 10 is preferably a so-called split transformer having a plurality of electrical taps, i.e. a plurality of electrical outlets. Therein, each electrical tap corresponds to one of a plurality of secondary coils, while a single primary coil is electrically connected to the main power line 15. By means of such a split transformer, the output voltage of the electrical generators 5 may be divided between the electrolysis units 13 at the full current level. The accordingly splitted AC voltage may then be rectified by means of a conversion device 11 for each electrolysis unit 13.

The hydropower assembly 3 is electrically connected to the plurality of electrolysis units 13 by means of a plurality of regulation assemblies 6, each comprising DC power electronics 6a for adjusting, in particular fine tuning, the voltage and current level to the requirements of the respective electrolysis unit 13. As shown in the present example, at least a part of the DC power electronics 6a may be controlled by means of a single control unit 6b. In this case, the control unit 6b operates as a central control unit. In an alternative, each DC regulation assembly 6 may comprise its own dedicated control unit (not shown).

In order to selectively divert the electrical energy generated by the hydropower assembly 3, for example during seasonal or daytime conditions which do not allow the generation of sufficient power to efficiently operate all electrolysis units 13, it is an option to provide a power distribution unit 16 electrically in between the hydropower units 14 and the electrolysis units 13. The power distribution unit 16 is preferably configured to route electrical energy to individual electrolysis units 13. In particular, the power distribution unit 16 may be configured to provide only a selected group of electrolysis units 13 with electrical energy generated by the hydropower units 14, e.g. when the total power output of the hydropower assembly 3 is insufficient, in order to avoid part load of the electrolysis units 13 and ensure ideal voltage and current levels at the group of electrolysis units 13.

Alternatively, the same control over power distribution may be achieved by a correspondingly configured control unit 6b or a plurality of dedicated control units, respectively. In particular, the control unit 6b may be configured to control a single or multiple DC power electronics 6a to interrupt the electrical connection between the hydropower assembly 3 and one or more, respectively, selected electrolysis units 13, e.g. in order to decrease the total power consumption.

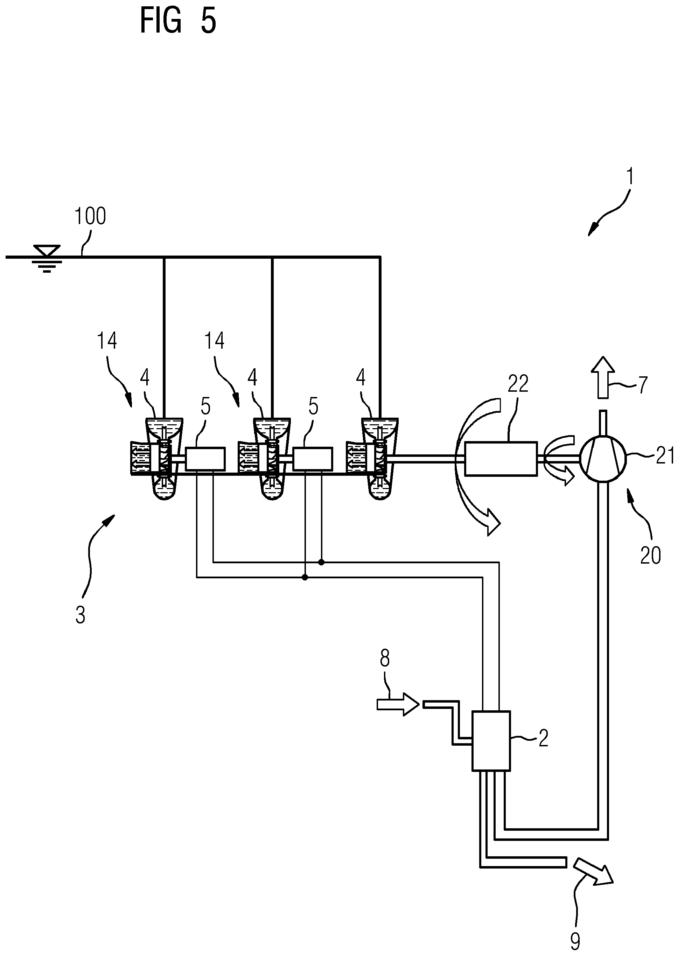

In order to facilitate easy supply with the supply medium 8, the electrolysis assemblies 2 may be coupled to a common supply line 17, in particular in parallel. Alternatively or additionally, in order to facilitate easy discharge of the at least one electrolysis product 7 and/or easy discharge of the side product 9, the electrolysis assemblies 2 may be coupled to a common product collection line 18 and/or a common side product collection line 19. The common product collection line 18 may in particular collect the at least one electrolysis product 7 and guide it to a compression assembly (cf. FIG 5 below).

In an alternative to the example shown in FIG 3, the plurality of the hydropower units 14 and the transformer 10 may be replaced by a single hydropower unit (not shown). This single hydropower unit advantageously comprises a so-called split electric generator having a plurality of electrical taps, wherein each tap corresponds to one of a plurality of secondary coils.

FIG 4 shows a second example of a hydropower-electrolysis system 1 comprising a plurality of electrolysis units 13 for electrolysis and a hydropower assembly 3 for generation of direct electrical current powering the electrolysis units 13. Similar to the example shown in FIG 3, each of the plurality of electrolysis units 13 comprises at least one electrolysis assembly 2 including a plurality of electrolysis cells (not shown). The electrolysis cells are configured to generate at least one electrolysis product 7 from a supply medium 8, along with a side product 9. The hydropower assembly 3 comprises a plurality of hydropower units 14. Each hydropower unit 14 includes a water turbine 4 in fluid communication with a water reservoir 100 and an electrical generator 5, the electrical generator 5 being configured as an AC electric generator. Similar to the example shown in FIG 3, the hydropower units 14 may be electrically connected in parallel by means of a main power line 15.

In contrast to the example shown in FIG 3, a transformer 10 electrically connected to the main power line 15 is a conventional transformer, and there are no individual regulation assemblies for each of the electrolysis units 13. Rather, a central DC regulation assembly 6 is provided, the DC regulation assembly 6 comprising DC power electronics 6a. The DC power electronics 6a may be controlled by a (central) control unit 6b. Distribution of the electrical power generated by the hydropower assembly 3 may in this case be achieved by an optional power splitter 6d of the DC regulation assembly 6.

FIG 5 shows an example of a hydropower-electrolysis system 1 comprising an electrolysis assembly 2 for electrolysis, a hydropower assembly 3 for generation of direct electrical current powering the electrolysis assembly 2, and a compression assembly 20. The compression assembly 20 is configured to pressurise, in particular liquefy, at least one electrolysis product 7 which is obtained by electrolysis of a supply medium 8 by means of the electrolysis assembly 2, along with a side product 9. To this end, the compression assembly 20 may comprise a compression unit 21, for example a compressor.

Advantageously, the compression unit 21 is a mechanically driven compression unit 21. That means that no electricity is used to drive the compression unit 21. Rather, it is preferred that the compression assembly 20, in particular the compression unit 21, is directly, in particular mechanically, coupled to at least one water turbine 4 of the hydropower assembly 3. By this means, the kinetic energy of water from a water reservoir 100 in fluid communication with the hydropower assembly 3 may be directly and thus efficiently, i.e. without conversion losses, used to pressurise the at least one electrolysis product 7.

In order to enable an adaption of torque and/or rotational speed of the at least one water turbine 4 to the requirements of the compression assembly 20, in particular the compression unit 21, the compression assembly 20 preferably comprises a gearbox 22. For example, the gearbox 22 may connect an output shaft of the at least one water turbine 4 with an input shaft of the compression unit 21.

The hydropower assembly 3 may comprise a plurality of water turbines 4, at least one of which is configured to drive the compression assembly 20. In the example shown in FIG 5, one is configured to drive the compression assembly 20. Other water turbines 4 (two in the present example) each may form a hydropower unit 14 with a respective electrical generator 5. Accordingly, those hydropower units 14 may be provided solely for powering the electrolysis assembly 2, while the at least one water turbine 4 not part of a hydropower unit 14 solely drives the compression assembly 20.

Of course, other configurations of the hydropower-electrolysis system 1 shown in FIG 5 are conceivable. For example, one or more water turbines 4 may be simultaneously coupled to an electrical generator 5 and to the compression assembly 20. Likewise, more than one electrolysis assembly 2 and/or compression unit 21 may be provided as well, in order to scale with an increased number of hydropower units 14 and/or the output power of the electrical generators 5.

Although the invention has been further illustrated and described in detail by the above examples, the invention is not limited by the disclosed examples, and other variations may be derived therefrom by those skilled in the art without departing from the scope of the invention.

## Claims

1. A hydropower-electrolysis system (1), comprising:
- an electrolysis assembly (2) comprising a plurality of electrolysis cells configured to generate, upon provision of a direct electrical current, at least one electrolysis product (7) from a supply medium (8); and
- a hydropower assembly (3) being directly electrically connected to the electrolysis assembly (2) for operating the electrolysis cells of the electrolysis assembly (2) based on electrical power generated by the hydropower assembly (3).

2. The hydropower-electrolysis system (1) according to claim 1, wherein the hydropower assembly (3) is located in the proximity of the electrolysis assembly (2), in particular in a range smaller than 10 km, preferably smaller than 5 km, in particular smaller than 1000 m.

3. The hydropower-electrolysis system (1) according to claim 1 or 2, comprising a DC regulation assembly (6) electrically arranged in between the hydropower assembly (3) and the electrolysis assembly (2), the DC regulation assembly (6) being configured to adjust the provision of electrical energy to the electrolysis assembly (2).

4. The hydropower-electrolysis system (1) according to any one of the preceding claims, comprising at least one energy storage unit (6c) configured to store at least a part of the electrical energy generated by the hydropower assembly (3).

5. The hydropower-electrolysis system (1) according to any one of the preceding claims, comprising a plurality of electrolysis units (13), each electrolysis unit (13) including an electrolysis assembly (2), wherein the hydropower assembly (3) comprises a plurality of hydropower units (14), each hydropower unit (14) including a water turbine (4) and an electrical generator (5) coupled to the water turbine (4), each hydropower unit (14) being electrically connected to one of the electrolysis units (13).

6. The hydropower-electrolysis system (1) according to any one of claims 1 to 4, comprising a plurality of electrolysis units (13), each electrolysis unit (13) including an electrolysis assembly (2), wherein the hydropower assembly (3) comprises an electrical generator (5) having a plurality of electrical taps, each tap being electrically connected to one of the electrolysis units (13).

7. The hydropower-electrolysis system (1) according to any one of the claims 1 to 4, wherein the hydropower assembly (3) comprises a plurality of hydropower units (14), each hydropower unit (14) including a water turbine (4) and an electrical generator (5) coupled to the water turbine (4), the plurality of hydropower units (14) being electrically connected in parallel via a main power line (15) and the electrolysis assembly (2) being electrically connected to the main power line (15).

8. The hydropower-electrolysis system (1) according to any one of claims 1 to 4 or 7, comprising a plurality of electrolysis units (13), each electrolysis unit (13) including an electrolysis assembly (2), wherein the hydropower assembly (3) comprises a transformer (10) having a plurality of electrical taps, each tap being electrically connected to one of the electrolysis units (13).

9. The hydropower-electrolysis system (1) according to any one of claims 1 to 4, 7 or 8, comprising a plurality of electrolysis units (13), each electrolysis unit (13) including a electrolysis assembly (2), wherein the hydropower assembly (3) comprises a power distribution unit (16) electrically coupled to the plurality of electrolysis units (13), the power distribution unit (16) being configured to adjust the amount of electrical energy provided to each of the electrolysis units (13).

10. The hydropower-electrolysis system (1) according to any one of the preceding claims, comprising an external power connection (12) configured to be electrically coupled to a power grid.

11. The hydropower-electrolysis system (1) according to any one of the preceding claims, comprising a compression assembly (20) for pressurizing the at least one electrolysis product (7), wherein the hydropower assembly (3) comprises at least one water turbine (4) mechanically coupled to the compression assembly (20).

12. The hydropower-electrolysis system (1) according to any one of the preceding claims, the hydropower-electrolysis system (1) being configured to cool at least one component of the hydropower-electrolysis system (1) by means of water for driving the hydropower assembly (3).

13. The hydropower-electrolysis system (1) according to any one of the preceding claims, the hydropower-electrolysis system (1) being configured to supply water for driving the hydropower assembly (3) to the electrolysis assembly (2) as the supply medium (8).

14. A hydro power plant, comprising a hydropower-electrolysis system (1) according to any one of the preceding claims.

15. A method for generating at least one electrolysis product (7) with a hydropower-electrolysis system (1), in particular with the hydropower-electrolysis system (1) according to any one of claims 1 to 13, the method comprising:
- converting kinetic energy of water into electrical power by means of a hydropower assembly (3); and
- generating the at least one electrolysis product (7) from a supply medium (8) by means of an electrolysis assembly (2) comprising a plurality of electrolysis cells, wherein the electrical power generated by means of the hydropower assembly (3) is provided to the plurality of electrolysis cells.
